(19) Europäisches Patentamt / European Patent Office / Office européen des brevets

(11) **EP 1 742 722 B1**

(12) **FASCICULE DE BREVET EUROPEEN**

(45) Date de publication et mention de la délivrance du brevet:
**05.03.2014 Bulletin 2014/10**

(21) Numéro de dépôt: **05759969.8**

(22) Date de dépôt: **21.04.2005**

(51) Int Cl.:
**B01D 63/06** *(2006.01)*     **B01D 71/02** *(2006.01)*
**B01D 61/14** *(2006.01)*     **C04B 38/00** *(2006.01)*

(86) Numéro de dépôt international:
**PCT/FR2005/000989**

(87) Numéro de publication internationale:
**WO 2005/110583 (24.11.2005 Gazette 2005/47)**

(54) **MEMBRANE AVEC SUPPORT A POROSITE MODIFIEE POUR LA FILTRATION TANGENTIELLE D'UN FLUIDE**

MEMBRAN BEINHALTEND TRäGER MIT VERäNDERTER POROSITäT ZUR TANGENTIALSTROMFILTRATION VON FLÜSSIGKEITEN

MEMBRANE COMPRISING SUPPORT WITH MODIFIED POROSITY FOR THE TANGENTIAL FLOW FILTRATION OF A FLUID

(84) Etats contractants désignés:
**AT BE BG CH CY CZ DE DK EE ES FI FR GB GR HU IE IS IT LI LT LU MC NL PL PT RO SE SI SK TR**

(30) Priorité: **23.04.2004 FR 0404307**

(43) Date de publication de la demande:
**17.01.2007 Bulletin 2007/03**

(73) Titulaire: **Technologies Avancees et Membranes Industrielles**
**26110 Nyons (FR)**

(72) Inventeur: **LESCOCHE, Philippe**
**F-84110 FAUCON (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
| | |
|---|---|
| **EP-A- 1 074 291** | **WO-A-2004/039481** |
| **US-A- 3 977 967** | **US-A- 4 088 576** |
| **US-A- 4 737 323** | **US-A- 4 746 341** |
| **US-A- 5 762 841** | **US-A1- 2004 050 773** |
| **US-B1- 6 375 014** | |

**Description**

La présente invention concerne le domaine technique de la séparation tangentielle mettant en oeuvre des éléments de séparation appelés généralement membranes. Ces membranes sont généralement réalisées à partir de matériaux inorganiques et constituées d'un support poreux et d'au moins une couche séparatrice dont la nature et la morphologie sont adaptées pour assurer la séparation des molécules ou des particules contenues dans le milieu fluide à traiter. La séparation par membranes sépare un liquide contenant des molécules et/ou particules en deux parties : une partie perméat contenant les molécules ou particules ayant traversé la membrane, et donc le support et la couche séparatrice, et une partie rétentat contenant des molécules ou particules retenues par la membrane.

L'objet de l'invention vise, plus précisément, la réalisation d'une membrane intégrant un support poreux.

Une membrane est une structure matérielle qui permet l'arrêt ou le passage sélectif sous l'effet d'une force motrice de transfert de substances entre les volumes de fluide qu'elle sépare.

Le nom de la séparation effectuée dépend de la force motrice de transfert. Si la force motrice de transfert est :

- un champ électrique, la séparation est appelée électrodialyse,
- une pression, la séparation est appelée microfiltration, ultrafiltration, nanofiltration ou osmose inverse,
- une différence de potentiel chimique, la séparation est appelée dialyse.

L'objet de l'invention trouve une application particulièrement avantageuse dans le domaine de la nanofiltration, l'ultrafiltration, la microfiltration, la filtration ou l'osmose inverse.

La séparation par membranes trouve deux principales applications :

- l'extraction dans le cas ou les molécules ou particules que l'on souhaite valoriser traverse la membrane,
- la concentration dans le cas ou les molécules ou particules que l'on souhaite valoriser sont retenues par la membrane.

D'une manière classique, une membrane se définit par l'association d'un support poreux en matière inorganique, telle qu'en céramique, et d'une ou plusieurs couches séparatrices en matière inorganique. Le support présente une surface orientée vers le fluide à traiter et donc d'entrée du perméat et une surface de sortie du perméat. La ou les couches séparatrices sont déposées sur la surface orientée vers le fluide à traiter et liées entre elles et au support, par frittage. Ces types de membrane sont appelés membrane composite. Ces membranes peuvent adopter différentes géométries, notamment planes ou tubulaires. Le rôle des couches est d'assurer la séparation des espèces moléculaires ou particulaires, tandis que le rôle du support est de permettre, par sa résistance mécanique, la réalisation de couches de faible épaisseur.

Si l'on considère qu'une membrane est dotée de pores s'étendant sur toute son épaisseur, transversalement à la direction de circulation, ces pores ont généralement une morphologie asymétrique (ou de type « tour Eiffel »), la partie la plus étroite étant en contact avec le fluide à traiter. Cette morphologie permet d'avoir un diamètre de pore minimum dans la partie active du pore avec pour conséquences une perméabilité maximale. Cette morphologie est obtenue, dans le cas des membranes céramiques, par empilement de milieux poreux de granulométrie décroissante, sur le support poreux.

Quand la force agissante est une pression, la séparation est uniquement physique. Les molécules ou particules ne sont pas modifiées et maintenues dans leur état initial. Les molécules ou particules arrêtées par la membrane se déposent à la surface de la membrane et réalisent un colmatage qui peut être très important.

Pour réduire ce dernier, deux technologies existent :

- le décolmatage tangentiel pour lequel le liquide à traiter circule tangentiellement à la surface de la membrane. Cette circulation fait apparaître un frottement qui accroît le coefficient de transfert,
- la rétrofiltration qui consiste à renvoyer en sens inverse à travers la membrane une partie du liquide filtré.

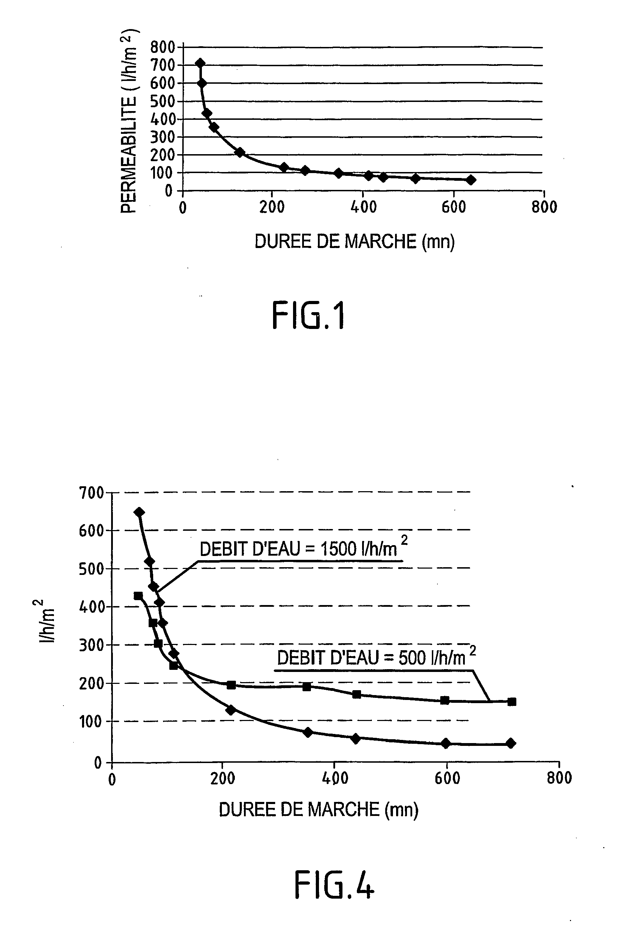

Aujourd'hui, les installations industrielles à membranes utilisent le décolmatage tangentiel seul ou associé avec de la rétrofiltration. Mais, quelque soit la technique de décolmatage utilisée, les courbes de perméabilité en fonction du temps ont toujours l'aspect de la courbe présentée **Fig.1.** Une chute brutale de perméabilité est observée dans les premiers instants de fonctionnement de la membrane. Cette chute se stabilise et se termine par un pseudo-palier. Le rapport entre la valeur de la perméabilité après 720 minutes de fonctionnement et celle après 4 minutes, est de 20. L'importance de cette chute montre que les systèmes de décolmatage actuels ne sont pas satisfaisants, bien qu'ils permettent d'obtenir des valeurs de perméabilité suffisantes pour être économiquement acceptables.

L'explication de cette chute de perméabilité au cours du temps est dans la nature du colmatage. En effet, deux types de colmatage apparaissent : le colmatage de surface et le colmatage de profondeur. Le colmatage de surface est limité par la circulation tangentielle du fluide à traiter, car cette dernière entraîne un frottement du fluide à traiter sur la surface de circulation, éliminant ainsi le dépôt existant sur la surface. La rétrofiltration devrait par principe être capable de déplacer des particules physiquement fixées à l'intérieur de la membrane et ainsi limiter le colmatage de profondeur. Néanmoins, la morphologie particulière des éléments constitutifs de la membrane, formant un réseau interconnecté de pores, réduit cette possibilité.

Les deux méthodes de décolmatage ne donnent donc pas entière satisfaction. Les premiers instants du fonctionnement de la membrane sont la raison de cette efficacité limitée. En effet dans l'exemple ci-dessus, la perméabilité de la membrane décroît de la valeur de la perméabilité à l'eau à la valeur de la perméabilité au produit. Le ratio entre ces deux valeurs est d'environ 20. Les particules, molécules arrivent à la surface de la membrane avec une vitesse qui est égale au rapport du débit par la surface filtrante. Dans les premiers instants de fonctionnement, cette vitesse est maximale et la quantité de mouvement d'une particule ou molécule est également maximale. Quand le choc avec la paroi se réalise, la particule ou molécule pénètrera d'autant plus profondément à l'intérieur de la membrane que sa quantité de mouvement sera importante. Or, une particule ou molécule qui pénètre dans la membrane est inaccessible au décolmatage tangentiel. Elle est d'autant plus difficilement éliminable par rétrofiltration que sa pénétration sera profonde.

Il faut donc éviter cette pénétration des particules, molécules dans la membrane.

Le document US 6 375 014 décrit un support macroporeux pour filtration tangentielle présentant un gradient de perméabilité selon le sens d'écoulement du fluide à traiter obtenu par un gradient de porosité moyenne sur la ceinture du support situé au niveau de la sortie du filtrat, qui augmente selon le sens d'écoulement du fluide à traiter.

Le document US 5 762 841 décrit un corps poreux céramique présentant une distribution de taille de particules en direction de son épaisseur qui est substantiellement continue et monotonique.

Le document US 2004/0050773 A1 décrit une membrane graduée comportant plusieurs couches. Une couche séparatrice en oxyde métallique est supportée par un support métallique fritté. Entre ces deux couches se trouve une couche métallique intermédiaire.

Dans ce contexte, la présente invention propose une solution permettant d'éviter cette pénétration et prévoit de limiter la perméabilité du support donc de la membrane, lorsque ce dernier est associé à une couche de séparation pour former une membrane.

Il est décrit un support poreux, pour la filtration tangentielle d'un fluide à traiter, présentant au moins une surface orientée vers le fluide à traiter circulant selon une direction de circulation et une surface de sortie pour une fraction appelée perméat traversant le support poreux. Ce support est , obtenu par modification et, en particulier par colmatage partiel, d'un support initial, et présente une perméabilité réduite, par rapport au support initial, et homogène lorsque l'on se déplace parallèlement à la surface du support orientée vers le fluide à traiter, selon la direction de circulation du fluide à traiter. Sa perméabilité est, de préférence, réduite d'un facteur compris entre 1,5 et 10 par rapport au support initial. Selon un aspect essentiel de l'invention, le support présente, sur une profondeur constante donnée mesurée à partir de la surface du support orientée vers le fluide à traiter, une porosité transversale moyenne croissante lorsque l'on se déplace à l'intérieur du support, transversalement à la surface du support orientée vers le fluide à traiter, de la surface orientée vers le fluide à traiter, vers la surface de sortie du perméat, la porosité longitudinale moyenne du support étant, quant à elle, homogène lorsque l'on se déplace à l'intérieur du support, parallèlement à la surface du support orientée vers le fluide à traiter, selon la direction de circulation du fluide à traiter.

L'invention a pour objet une membrane telle que définie dans la revendication 1 pour la filtration tangentielle d'un fluide à traiter, associant un support poreux tel que défini ci-dessus avec au moins une couche de séparation pour le fluide à traiter, recouvrant la surface du support orientée vers le fluide à traiter, ladite couche de séparation présentant une porosité inférieure ou égale à celle du support.

Selon un autre de ses aspects, l'invention concerne un procédé de fabrication d'un support poreux selon la revendication 13, pour la filtration tangentielle d'un fluide à traiter, présentant au moins une surface orientée vers le fluide à traiter circulant selon une direction de circulation et une surface de sortie pour une fraction appelée perméat traversant le support poreux, qui comprend une étape consistant à modifier un support poreux initial par pénétration, sur une profondeur sensiblement constante, à partir de la surface du support orientée vers le fluide à traiter, de particules inorganiques de diamètre moyen inférieur au diamètre moyen dp des pores du support initial, transversalement à la surface du support orientée vers le fluide à traiter, de la surface orientée vers le fluide à traiter, vers la surface de sortie du perméat, la porosité longitudinale moyenne du support étant, quant à elle, homogène lorsque l'on se déplace à l'intérieur du support, parallèlement à la surface du support orientée vers le fluide à traiter, selon la direction de circulation du fluide à traiter.

Diverses autres caractéristiques ressortent de la description faite ci-dessous en référence aux figures annexées.

La **Fig. 1** représente l'évolution en fonction du temps de la perméabilité d'une membrane de l'art antérieur.

La **Fig. 2** représente une coupe longitudinale d'un support.

La **Fig. 3** représente une coupe transversale d'une membrane selon l'invention comportant un support conforme à la **Fig. 2.**

La **Fig. 4** compare l'évolution en fonction du temps de la perméabilité d'une membrane selon l'invention avec celle d'une membrane de l'art antérieur.

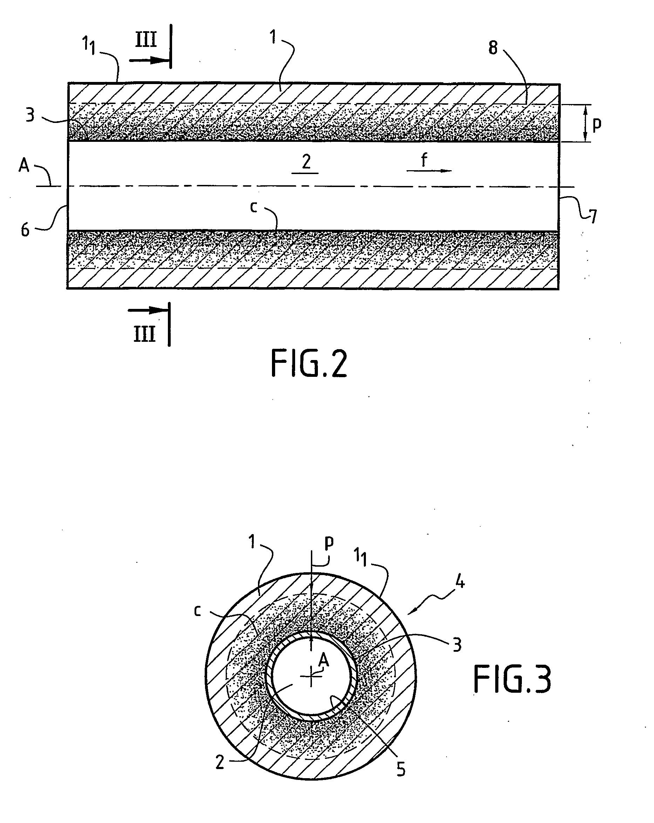

Le support poreux est constitué dans une matière inorganique dont la résistance au transfert est adaptée à la séparation à effectuer. Le support poreux **1** est réalisé à partir de matériaux inorganiques, tels que des oxydes métalliques, du carbone ou des métaux. Dans l'exemple de réalisation illustré à la **Fig.2,** le support poreux **1** est de forme tubulaire allongée s'étendant selon un axe central longitudinal **A**. Une forme plane s'étendant selon un plan central pourrait également être adoptée. Le support poreux **1** possède une section droite transversale polygonale ou, comme dans l'exemple illustré à la **fig. 2,** une section transversale circulaire.

Le support poreux **1** présente au moins une surface **3** orientée vers le fluide à traiter, qui correspond à la surface sur laquelle circule le fluide à traiter quand le support est utilisé seul. Pour la réalisation d'une membrane **4,** le support **1** est généralement associé à une couche de séparation **5,** auquel cas, le fluide à traiter ne circule pas directement sur la surface **3** du support orientée vers le fluide à traiter, mais sur la couche de séparation **5**. La surface **3** du support orientée vers le fluide à traiter est alors recouverte par cette couche de séparation **5,** destinée à être en contact avec le milieu fluide à traiter circulant selon une direction et un sens de circulation entre une extrémité amont et une extrémité aval du support, pour une telle membrane fonctionnant en mode tangentiel. La nature de la ou des couches séparatrices **5** est choisie en fonction du pouvoir de séparation ou de filtration à obtenir et forme, avec le support poreux **1,** une liaison intime. Cette ou ces couches peuvent être déposées à partir, par exemple, de suspensions contenant au moins un oxyde métallique et classiquement utilisé dans la production des éléments de filtration minéraux. Cette ou ces couches sont soumises après séchage à une opération de frittage qui permet de les consolider et de les lier entre elles ainsi qu'au support poreux **1**. Une partie du milieu fluide traverse la couche séparatrice **5** et le support poreux **1,** et le support **1** présente une surface **1₁** de sortie pour cette partie traitée du fluide, appelée perméat.

Le support poreux **1** peut être aménagé pour comporter au moins un et, dans l'exemple illustré **fig.2,** un canal **2** réalisé parallèlement à l'axe **A** du support. Dans l'exemple illustré, le canal présente une section droite transversale à l'axe **A** du support, de forme cylindrique. Le canal **2** présente une surface interne **3** qui correspond à la surface **3** du support orientée vers le fluide à traiter. Pour la réalisation d'une membrane **4,** le support **1** est associé à une couche de séparation **5**. La **fig.3** illustre un exemple de réalisation de membrane de type tubulaire. Selon cet exemple, le canal **2** est recouvert par une couche de séparation **5,** destinée à être en contact avec le milieu fluide à traiter, circulant à l'intérieur du canal **2,** selon un sens de circulation, entre ses deux extrémités ouvertes. L'une de ces extrémités est nommée extrémité amont **6** et l'autre extrémité aval **7**. Le fluide à traiter pénètre dans le canal par l'extrémité amont **6** et le retentat sort du canal par l'extrémité aval **7**. La surface **1₁** de sortie du perméat correspond, dans le cas de membranes comportant un ou plusieurs canaux, à la surface périphérique externe **1₁** du support, qui est cylindrique de section circulaire dans l'exemple illustré **fig.2** et **3**.

En préalable à la description plus précise de l'invention, il y a lieu de donner un certain nombre de définitions.

La porosité du support désigne le volume des pores du support par rapport au volume total apparent du support. La porosité est mesurée, par exemple, par porométrie mercure. Il s'agit d'un appareil qui envoie du mercure sous pression dans un échantillon poreux. Cet appareil donne la distribution des diamètres de pores mais également la porosité du corps poreux.

La porosité moyenne est mesurée sur une tranche volumique d'épaisseur constante donnée s'étendant selon une direction centrale suivant laquelle on souhaite mesurer son éventuelle variation. Dire que cette porosité moyenne est homogène ou sensiblement constante signifie que lorsque cette tranche d'épaisseur constante est divisée en une série de volumes élémentaires égaux correspondant à des tronçons s'étendant transversalement par rapport à l'axe central de la tranche correspondant à la direction de mesure, la porosité moyenne de ces volumes élémentaires ne varie pas lorsque l'on se déplace le long de l'axe central de cette tranche. Dire que cette porosité moyenne augmente signifie que la porosité moyenne des volumes élémentaires augmente.

On nommera :

- porosité longitudinale moyenne du support, la porosité mesurée lorsqu'on se déplace au sein du support, parallèlement à la surface orientée vers le fluide à traiter (qui correspond à la surface interne du ou des canaux dans le cas d'un support mono ou multi canaux), selon la direction de circulation du fluide à traiter.
- porosité transversale, la porosité mesurée lorsqu'on se déplace au sein du support transversalement, c'est à dire perpendiculairement, à la surface orientée vers le fluide à traiter.

La densité de flux par unité de pression et la perméabilité d'un support poreux traduisent la facilité qu'un milieu fluide a à traverser ledit support. La densité de flux, au sens de l'invention, désigne la quantité en $m^3$ de perméat traversant l'unité de surface (en $m^2$) de support par unité de temps (en s). La densité de flux par unité de pression est donc mesurée en $m^3/m^2/s/Pa \times 10^{-12}$.

La perméabilité, au sens de l'invention, correspond à la densité de flux par unité de pression ramenée à l'épaisseur et est exprimée en $m^3/m^2/s/m/Pa \times 10^{-12}$. La perméabilité est l'inverse d'une résistance. La résistance d'une membrane est égale à la somme des résistances du support et de la couche de séparation. Bien entendu, dans une membrane, la résistance du support est plus faible que celle de la couche de séparation car son diamètre moyen de pores est plus élevé. La résistance au transfert d'un fluide à travers un corps poreux est dépendante du diamètre de pores, de la porosité, et de l'épaisseur de ce corps poreux. Dire qu'un support ou une membrane présente une perméabilité homogène lorsque l'on se déplace parallèlement à la surface orientée vers le fluide à traiter (qui correspond à la surface interne du ou des canaux dans l'un cas d'un support mono ou multi canaux), selon la direction de circulation du fluide à traiter, signifie que, si cette membrane ou se support est découpée en tranches s'étendant perpendiculairement à l'axe longitudinal du support, dans le cas d'un support tubulaire, ou perpendiculairement au plan central du support, dans le cas d'un support plan, d'épaisseur égale (prise parallèlement à l'axe longitudinal ou au plan central), la perméabilité mesurée pour chacune de ces tranches est sensiblement constante.

Conformément à l'invention, le support **1** présente une porosité modifiée sur une profondeur adjacente à la surface **3** du support par rapport au reste du support. Au voisinage de la surface **3** orientée vers le fluide à traiter, le support **1** présente, une porosité plus faible, de ce fait la porosité du support augmente lorsque l'on se déplace transversalement à la surface **3** orientée vers le fluide à traiter, de cette surface **3** vers la surface **1**$_1$ de sortie du perméat. Dans les exemples illustrés **fig. 2** et **3** montrant un support tubulaire monocanal et la membrane associée, la porosité du support augmente lorsque l'on se déplace transversalement à la surface **3** du canal **2**, du canal **2** vers la surface externe **1**$_1$. Cette variation de porosité transversale est due, par exemple, à un colmatage partiel, le long du support **1**, à partir de la surface **3** orientée vers le fluide à traiter. Néanmoins, la porosité longitudinale reste, quant à elle sensiblement constante, lorsque l'on se déplace, parallèlement à la surface orientée vers le fluide à traiter, selon la direction de circulation du fluide à traiter, c'est à dire le long du canal, de l'une à l'autre de ses extrémités, dans l'exemple illustré **fig. 2**. Ce colmatage est dit « partiel », car le support n'est pas totalement colmaté puisqu'il laisse passer un fluide. Le support **1** présente, sur une profondeur e constante donnée mesurée à partir de la surface **3** du support orientée vers le fluide à traiter, une porosité transversale moyenne croissante lorsque l'on se déplace à l'intérieur du support, transversalement à la surface **3** du support orientée vers le fluide à traiter, en s'éloignant de cette surface **3** orientée vers le fluide à traiter. Avantageusement, le colmatage c partiel varie, lorsque l'on se déplace perpendiculairement à la surface **3** orientée vers le fluide à traiter et crée un gradient de porosité moyenne, sur une profondeur **p** constante, qui augmente lorsque l'on s'éloigne de cette surface **3**. La partie du support **1** la plus colmatée présentant la porosité moyenne la plus faible est située à proximité de la surface **3** orientée vers le fluide à traiter et donc du canal **2** dans l'exemple illustré, tandis que la partie la moins colmatée présentant la porosité moyenne la plus importante est située vers la surface **1**$_1$ de sortie du perméat (surface périphérique externe **1**$_1$ du support **1** dans l'exemple illustré **fig. 2).**

Selon une variante préférée de l'invention le diamètre moyen des pores du support augmente au sein du support **1,** quand on se déplace, transversalement à la surface **3** du support orientée vers le fluide à traiter, de la surface **3** orientée vers le fluide à traiter, vers la surface **1**$_1$ de sortie du perméat.

Le gradient de porosité moyenne est réalisé par pénétration, dans un support initial, à partir de la surface **3** du support orientée vers le fluide à traiter, de particules de diamètre moyen inférieur au diamètre moyen des pores du support initial, ce qui permet d'obtenir un colmatage **c** partiel du support **1.** Selon l'exemple illustré **Fig.2,** ce colmatage partiel est réalisé sur une certaine profondeur **p** constante (inférieure ou égale à la profondeur e), mesurée à partir de la surface **3** du support orientée vers le fluide à traiter. Cette profondeur **p** est déterminée à partir de la surface **3** du support orientée vers le fluide à traiter. Le colmatage **c** correspondant à la pénétration des particules s'effectue sur une profondeur **p** qui dépend de la taille, c'est à dire du diamètre des particules, et des conditions expérimentales de pénétration. En général, la profondeur **p** de la pénétration est importante et est choisie en fonction de la diminution de perméabilité souhaitée. Le support **1** est, par exemple, colmaté sur une profondeur **p** supérieure au rayon moyen des particules agglomérées constituant le support initial, et de préférence supérieure à leur diamètre moyen, la profondeur maximale est celle atteinte par les particules les plus fines, lors de l'opération de colmatage. De façon avantageuse, le colmatage partiel est réalisé sur une profondeur **p** supérieure ou égale à 2,5 $\mu$m, de préférence supérieure ou égale à 5 $\mu$m. Le support selon l'invention présente une perméabilité artificiellement réduite par rapport au support initial, mais homogène lorsque l'on se déplace parallèlement à la surface orientée vers le fluide à traiter, selon la direction de circulation du fluide à traiter.

Selon une première variante de l'invention, la porosité transversale moyenne peut augmenter sensiblement de manière continue, lorsque l'on s'éloigne de la surface **3** du support orientée vers le fluide à traiter. Selon une autre variante, la porosité transversale moyenne peut augmenter, par paliers **P$_i$.** Lesdits paliers sont, de préférence, tous de longueur prise transversalement à la surface **3** orientée vers le fluide à traiter, sensiblement identique.

Il est à noter que les exemples décrits **fig.2** et **3** concernent un support monocanal comportant un canal de forme cylindrique de section droite transversale sensiblement ovoïde. Bien entendu, l'objet de l'invention peut être mis en oeuvre sur des supports comportant un ou plusieurs canaux de formes variées et diverses. Dans le même sens, il est clair que l'objet de l'invention peut être appliqué à un support comportant au moins un canal **2** de section transversale polygonale, aménagé dans un bloc poreux. Dans le cas d'un support **1** du type plan, il est possible de faire circuler le fluide à traiter directement sur l'une des faces **3** du support, le perméat sortant sur l'autre face **1**₁, sans qu'aucun canal soit aménagé dans la masse du support. Dans ce type de support poreux **1** de type plan, une série de canaux **2** présentant chacun une section droite transversale rectangulaire peuvent également être superposés. Dans le cas de supports comportant plusieurs canaux, le support présente une porosité telle que ci-dessus définie, sur une certaine profondeur s'étendant à partir de chaque surface interne **3** délimitant un canal **2**. Le support présente donc une porosité modifiée, sur les volumes adjacents à la surface interne **3,** situés aussi bien entre un canal **2** et la surface externe **1**₁ du support, qu'entre deux canaux **2**.

Le support poreux selon l'invention présente donc une porosité définie par une porosité transversale moyenne croissante quand on se déplace, dans la masse du support, selon le même sens que le perméat, et une porosité longitudinale moyenne constante, ce qui permet d'obtenir une perméabilité pour ce support plus faible que la perméabilité des supports classiques de l'art antérieur.

L'objet de l'invention vise également à proposer un procédé pour réaliser un support de filtration **1** tel que décrit ci-dessus. Un tel procédé comprend une étape consistant à modifier le support initial par pénétration, à partir de la surface 3 du support orientée vers le fluide à traiter, de particules inorganiques, de diamètre moyen inférieur au diamètre moyen **dp** des pores du support initial avant modification. Cette pénétration est réalisée de façon à obtenir une porosité transversale moyenne croissante lorsque l'on se déplace à l'intérieur du support, transversalement à la surface **3** du support orientée vers le fluide à traiter, de cette surface **3** vers la **surface 1**₁ du support **1** de sortie pour le perméat, la porosité longitudinale moyenne du support **1** étant, quant à elle, homogène lorsque l'on se déplace à l'intérieur du support **1** parallèlement à la surface du support orientée vers le fluide à traiter, selon la direction de circulation du fluide à traiter.

Par diamètre moyen inférieur au diamètre moyen **dp** des pores du support initial, on entend de préférence que le diamètre moyen des particules inorganiques est compris entre **dp**/100 et **dp**/2.

La pénétration des particules à l'intérieur du support initial est réalisée à l'aide d'une suspension défloculée de telles particules. La défloculation de la suspension est nécessaire afin d'éviter la formation d'agglomérats de particules et donc conserver des particules sous une forme individualisée capables de pénétrer à l'intérieur des pores du support. La suspension présente, de façon avantageuse, une faible viscosité.

De telles particules sont constituées d'un matériau inorganique tel que des oxydes métalliques, le matériau inorganique constitutif des particules inorganiques pouvant être identique à celui constituant le support et/ou l'éventuelle couche de séparation **5**.

L'étape de pénétration est suivie d'une étape de frittage qui permet de regrouper les particules présentes dans les pores du support solide 1 entraînant un grossissement et un amalgame desdites particules et fixant le colmatage du support poreux **1**. La description qui suit vise un procédé pour réaliser un support tel qu'illustré à la **fig. 2** présentant au moins un canal interne **2**. Dans ce cas, la pénétration de particules de même granulométrie ou d'un mélange de particules de granulométrie différentes est réalisée à l'intérieur des pores du support sur une profondeur **p;** mesurée à partir de la surface interne **3** du support **1** orientée vers le fluide à traiter, constante lorsqu'on se déplace parallèlement à la surface **3** du support **1** orientée vers le fluide à traiter. Une telle pénétration constante sur la longueur du support, mais variable sur la profondeur (c'est-à-dire que plus on se place à une profondeur importante, vis-à-vis de la surface interne **3** du canal **2,** moins la pénétration de particules est importante), peut être réalisée par la méthode de l'engobage. Cette méthode consiste à disposer le support poreux **1** verticalement et à remplir le canal **2** avec une suspension défloculée de particules inorganiques de diamètre moyen inférieur au diamètre moyen **dp** des pores du support (avant colmatage) par l'intermédiaire d'une pompe de type péristaltique et à vitesse de rotation variable. Le temps de remplissage du canal est appelé **Tr**. Le temps pendant lequel le support est maintenu rempli avec la suspension par action sur la vitesse de rotation de la pompe est appelé **Ta**. Le support est ensuite vidé par inversion du sens de rotation de la pompe, le temps de vidange étant appelé **Tv**. Les trois temps **Tr, Ta, Tv** définissent le temps de contact **Tc** entre chaque point de la surface interne **3** du support 1 et la suspension.

En un point x de la surface interne 3 du support 1 situé à une hauteur h, le temps de contact Tc avec la suspension est égal à :

$$Tc = (Tr + Ta + Tv) - Ss / Qpr * h - Ss / Qpv * h \quad (I)$$

Où:

**Tr** = temps de remplissage
**Ta** = temps d'attente tube plein
**Tv** = temps de vidange
**Tc** = temps de contact

**Qpr** = débit de la pompe durant le remplissage
**Qpv** = débit de la pompe durant la vidange
**Ss** = section des canaux
**h** = hauteur de remplissage

La profondeur **p** de pénétration des particules à l'intérieur du support dépend du temps de contact **Tc** entre le support poreux **1** et la suspension. Aussi, en ajustant les paramètres **Tr, Ta, Tv,** il est possible d'obtenir une profondeur **p** de pénétration sensiblement constante de l'extrémité haute jusqu'à l'extrémité basse du support. En utilisant différentes valeurs du temps de contact **Tc,** en jouant sur **Tr, Ta** et **Tv** selon la relation **(I),** il est possible de choisir la masse des particules inorganiques pénétrant à l'intérieur du support **1.** La variation de profondeur de pénétration des particules se fait naturellement, au fur et à mesure de l'accumulation au sein du support **1** et par diminution l'aspiration capillaire de ce dernier.

Une autre technique permettant d'obtenir un colmatage c homogène le long du canal est d'effectuer une pénétration verticale en deux étapes, c'est à dire en retournant le support et donc en inversant ses extrémités haute et basse, au milieu de la pénétration.

En fait, l'invention permet de fabriquer à façon des supports et, par conséquent, des membranes de porosité et donc de perméabilité choisie en fonction des besoins. En particulier, l'invention permet, en diminuant la perméabilité du support de diminuer la perméabilité de la membrane obtenue à partir d'un tel support. Le procédé présente également l'intérêt de « maîtriser » la perméabilité finale du support, voire de la membrane. En effet, il est possible de moduler le niveau de perméabilité par le réglage de différents paramètres, par exemple :

- choix de la taille des particules, qui joue notamment sur la profondeur de pénétration et la densité du colmatage,
- concentration de la suspension défloculée,
- durée d'imprégnation,
- nombre d'opérations d'imprégnation, en effet, il est possible d'effectuer plusieurs pénétrations successives en utilisant des particules de même diamètre ou de diamètre différent, et en particulier dans le cas d'un gradient en palier **P$_i$.**

Bien entendu, la fabrication d'un support poreux comportant une telle porosité définie, comme précédemment, par une porosité transversale moyenne croissante et une porosité longitudinale moyenne constante, peut être réalisé par d'autres procédés que ceux décrits ci-dessus. Notamment, dans le cas d'un support plan sans canal, la pénétration se fera, à partir de la surface 3 destinée à être orientée vers le fluide à traiter, cette surface 3 étant disposée horizontalement.

Selon un autre aspect de l'invention, il peut être prévu de réaliser successivement, voire même simultanément selon un procédé continu, le colmatage du support et le dépôt de la couche de séparation sur la surface 3 du support 1 orientée vers le fluide à traiter. Pour le colmatage du support, il est donc possible d'utiliser des particules inorganiques identiques en dimension et en composition à celles utilisées pour le dépôt de la couche de séparation 5, lors de la fabrication d'une membrane.

Le support selon l'invention peut être utilisé seul, pour la filtration notamment de milieux corrosifs, étant donné que sa faible porosité, directement au voisinage de surface 3 du support 1 orientée vers le fluide à traiter, autorise une filtration déjà satisfaisante. La surface 3 du support 1 orientée vers le fluide à traiter délimite donc la surface de circulation du fluide.

Selon une de ses applications principales, le support est utilisé dans la conception de membranes et est associé à une couche de séparation 5 présentant une porosité inférieure, ou éventuellement égale à la plus faible porosité du support, c'est-à-dire à celle proche de la surface 3 du support 1 orientée vers le fluide à traiter.

Selon une variante préférée, la couche de séparation 5 pourra présenter une épaisseur diminuant selon le sens de circulation f du fluide à traiter, comme décrit dans EP 1 074 291**.**

La description qui suit vise à fournir un exemple de réalisation de membrane conforme à l'invention.

Un support multicanal de diamètre externe 25 mm et de longueur 1200 mm est utilisé. Ce support poreux possède un diamètre moyen équivalent de pores de 5 µm.

Une suspension de particules d'oxyde de zircone dont la granulométrie est de 0,6 µm est préparée. Cette suspension aqueuse est défloculée par ajustement du pH, à l'aide d'acide acétique, suivi d'une étape de broyage/désagglomération dans une jarre contenant des billes en zircone fritté. La suspension ne contient aucun liant organique et la concentration de particules est inférieure à 100 g/l. Les valeurs de ces deux paramètres sont destinées à obtenir une viscosité très basse.

Le support est modifié par engobage à l'aide de cette suspension. Deux dépôts sont réalisés suivis d'un séchage. On réalise ensuite une ou plusieurs couches de filtration. La membrane finale obtenue présente un seuil de coupure de 0,14 µm.

La perméabilité à l'eau est mesurée à 500 1/h/m$^2$/bar. A titre de comparaison, la perméabilité d'une membrane fabriquée de la même façon, mais sans l'étape de modification du support, est mesurée à 1500 l/h/m$^2$/bar.

La **Fig. 4** ci-dessous représente la perméabilité de ces deux membranes lors de filtration de lait et illustre parfaitement l'intérêt de l'invention. Il apparaît clairement que l'utilisation d'un support conforme à l'invention permet de limiter la perte de perméabilité de la membrane, avec le temps de fonctionnement.

**Revendications**

1. Membrane **(4)** pour la filtration tangentielle d'un fluide à traiter, associant :

   - un support poreux **(1),** pour la filtration tangentielle d'un fluide à traiter, formé d'un matériau inorganique choisi parmi les oxydes métalliques, le dit support présentant au moins une surface **(3)** orientée vers le fluide à traiter circulant selon une direction de circulation et une surface de sortie **(1$_1$)** pour une fraction appelée perméat traversant le support poreux,
   - avec au moins une couche de séparation **(5)** pour le fluide à traiter, obtenue à partir d'une suspension contenant au moins un oxyde métallique et recouvrant la surface **(3)** du support orientée vers le fluide à traiter, ladite couche de séparation **(5)** présentant une porosité inférieure à celle du support**(1)**

   **caractérisée en ce que** le support **(1)** correspond à un support initial partiellement colmaté avec des particules constituées en un matériau choisi parmi les oxydes métalliques et présente, sur une profondeur (p) constante donnée mesurée à partir de la surface **(3)** du support orientée vers le fluide à traiter, une porosité transversale moyenne croissante lorsque l'on se déplace à l'intérieur du support, transversalement à la surface **(3)** du support orientée vers le fluide à traiter, de la surface **(3)** du support orientée vers le fluide à traiter, vers la surface de sortie **(1$_1$)** pour le perméat, la porosité longitudinale moyenne du support **(1)** étant, quant à elle, homogène lorsque l'on se déplace à l'intérieur du support **(1),** parallèlement à la surface **(3)** du support orientée vers le fluide à traiter, selon la direction de circulation du fluide à traiter.

2. Membrane poreuse **(1)** selon la revendication 1 **caractérisée en ce que** sa perméabilité est réduite d'un facteur compris entre 1,5 et 10 par rapport au support initial.

3. Membrane **(1)** selon la revendication 1 ou 2, **caractérisée en ce que** le diamètre moyen des pores augmente sur la profondeur **(e)** du support **(1),** lorsque l'on se déplace à l'intérieur du support **(1),** transversalement à la surface **(3)** du support orientée vers le fluide à traiter, de la surface **(3)** du support orientée vers le fluide à traiter, vers la surface de sortie **(1$_1$)** pour le perméat.

4. Membrane selon l'une des revendications 1 à 3, **caractérisée en ce que** le support **(1)** est obtenu , par colmatage **(c)** partiel d'un support initial **(1)** réalisé à partir de la surface **(3)** du support orientée vers le fluide à traiter, sur une profondeur (p) constante donnée mesurée à partir de la surface **(3)** du support orientée vers le fluide à traiter.

5. Membrane selon l'une des revendications 1 à 4, **caractérisée en ce que** le colmatage **(c)** partiel est réalisé de façon à présenter sur cette profondeur **(p)** constante, une porosité transversale moyenne croissante lorsque l'on se déplace à l'intérieur du support, transversalement à la surface **(3)** du support orientée vers le fluide à traiter, de la surface **(3)** du support orientée vers le fluide à traiter, vers la surface de sortie **(1$_1$)** pour le perméat.

6. Membrane selon la revendication 4 ou 5, **caractérisée en ce que** la profondeur **(p)** de colmatage est supérieure au rayon moyen des particules agglomérées constituant le support initial, et de préférence supérieure à leur diamètre moyen.

7. Membrane selon l'une des revendications 4 à 6, **caractérisée en ce que** la profondeur **(p)** de colmatage est supérieure ou égale à 2,5 $\mu$m, de préférence supérieure ou égale à 5 $\mu$m.

8. Membrane selon l'une des revendications 1 à 7, **caractérisée en ce que** le colmatage **(c)** partiel du support est obtenu par pénétration, à partir de la surface **(3)** du support orientée vers le fluide à traiter, de particules inorganiques de diamètre moyen inférieur au diamètre moyen **dp** des pores du support avant colmatage, et de préférence compris entre **dp**/100 et **dp**/2.

9. Membrane selon la revendication 8, **caractérisée en ce que** la pénétration de particules inorganiques est suivie d'un frittage.

**10.** Membrane selon l'une des revendications 4 à 9, **caractérisée en ce que** la porosité transversale moyenne augmente de façon régulière et continue sur la profondeur **(p)** lorsque l'on se déplace à l'intérieur du support **(1)**, transversalement à la surface **(3)** du support orientée vers le fluide à traiter, de la surface **(3)** du support orientée vers le fluide à traiter, vers la surface de sortie ($1_1$) pour le perméat.

**11.** Membrane selon l'une des revendications 1 à 9, **caractérisée en ce que** la porosité transversale moyenne augmente par paliers ($P_i$), lorsque l'on se déplace à l'intérieur du support **(1)**, transversalement à la surface **(3)** du support orientée vers le fluide à traiter, de la surface **(3)** du support orientée vers le fluide à traiter, vers la surface de sortie **($1_1$)** pour le perméat.

**12.** Membrane selon l'une des revendications 1 à 11 **caractérisée en ce qu'**il comprend au moins un canal interne **(2)** ouvert à ses deux extrémités et délimité par la surface **(3)** du support orientée vers le fluide à traiter.

**13.** Membrane selon l'une des revendications 1 à 12, **caractérisée en ce que** la couche de séparation **(5)** présente une épaisseur qui diminue, selon le sens de circulation **f** du fluide à traiter.

**14.** Procédé de fabrication d'une membrane pour la filtration tangentielle d'un fluide à traiter, comportant un support poreux **(1)** formé d'un matériau inorganique choisi parmi les oxydes métalliques, qui présente au moins une surface **(3)** orientée vers le fluide à traiter circulant selon une direction de circulation, et une surface de sortie **($1_1$)** pour une fraction appelée perméat traversant le support poreux, **caractérisé en ce qu'**il comprend une étape consistant à modifier un support poreux initial par pénétration, sur une profondeur **(p)** sensiblement constante, à partir de la surface **(3)** du support orientée vers le fluide à traiter, de particules inorganiques constituées en un matériau choisi parmi les oxydes métalliques de diamètre moyen inférieur au diamètre moyen **dp** des pores du support initial, de façon à obtenir une porosité transversale moyenne croissante lorsque l'on se déplace à l'intérieur du support, transversalement à la surface **(3)** du support orientée vers le fluide à traiter, de la surface (3) du support orientée vers le fluide à traiter, vers la surface de sortie **($1_1$)** pour le perméat, la porosité longitudinale moyenne du support **(1)** étant, quant à elle, homogène lorsque l'on se déplace à l'intérieur du support (1), parallèlement à la surface (3) du support orientée vers le fluide à traiter, selon la direction de circulation du fluide à traiter.

**15.** Procédé selon la revendication 14 **caractérisé en ce que** l'étape consistant à modifier le support poreux par pénétration est suivie d'une étape de frittage.

**16.** Procédé selon la revendication 14 ou 15, **caractérisé en ce que** le diamètre moyen des particules inorganiques est compris entre **dp**/100 et **dp**/2.

**17.** Procédé selon l'une des revendications 14 à 16 **caractérisé en ce que** la pénétration de particules inorganiques est réalisée sur une profondeur **(p)** supérieure au rayon moyen des particules agglomérées constituant le support initial, et de préférence supérieure à leur diamètre moyen.

**18.** Procédé selon l'une des revendications 14 à 17 **caractérisé en ce que** le colmatage du support est décroissant sur la profondeur **(p)** de pénétration des particules inorganiques, lorsque l'on se déplace à l'intérieur du support, transversalement à la surface **(3)** du support orientée vers le fluide à traiter, de la surface **(3)** du support orientée vers le fluide à traiter, vers la surface de sortie **($1_1$)** pour le perméat.

**19.** Procédé selon l'une des revendications 14 à 18, **caractérisé en ce que** le colmatage est réalisé de manière à ce que la perméabilité du support obtenu soit réduite d'un facteur compris entre 1,5 et 10 par rapport au support initial.

**Patentansprüche**

**1.** Membran (4) für die Tangentialfiltration eines zu behandelnden Fluids, die verbindet:

- einen porösen Träger (1) für die Tangentialfiltration eines zu behandelnden Fluids, der von einem aus Metalloxiden ausgewählten anorganischen Material gebildet ist, wobei der Träger wenigstens eine Fläche (3), die dem in einer Zirkulationsrichtung zirkulierenden zu behandelnden Fluid zugewandt ist, und eine Austrittsfläche ($1_1$) für eine als Permeat bezeichnete Fraktion, welche den porösen Träger durchquert, aufweist,
- mit wenigstens einer Trennschicht (5) für das zu behandelnde Fluid, die aus einer wenigstens ein Metalloxid enthaltenden Suspension erhalten wird und die dem zu behandelnden Fluid zugewandte Fläche (3) des Trägers bedeckt, wobei die Trennschicht (5) eine Porosität aufweist, die geringer als die des Trägers (1) ist,

**dadurch gekennzeichnet, dass** der Träger (1) einem Ausgangsträger entspricht, der teilweise mit Partikeln zugesetzt ist, die aus einem aus Metalloxiden ausgewählten Material bestehen, und über eine gegebene konstante Tiefe (p), die ausgehend von der dem zu behandelnden Fluid zugewandten Fläche (3) des Trägers gemessen ist, eine zunehmende mittlere Querporosität aufweist, wenn man sich innerhalb des Trägers, quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt, wobei die mittlere Längsporosität des Trägers (1) ihrerseits homogen ist, wenn man sich innerhalb des Trägers (1), parallel zu der dem zu behandelnden Fluid zugewandten Fläche (3) des Trägers, in der Zirkulationsrichtung des zu behandelnden Fluids bewegt.

2. Poröse Membran (1) nach Anspruch 1, **dadurch gekennzeichnet, dass** ihre Permeabilität um einen Faktor zwischen 1,5 und 10 gegenüber dem Ausgangsträger reduziert ist.

3. Membran (1) nach Anspruch 1 oder 2, **dadurch gekennzeichnet, dass** der mittlere Durchmesser der Poren über die Tiefe (e) des Trägers (1) zunimmt, wenn man sich innerhalb des Trägers (1), quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt.

4. Membran nach einem der Ansprüche 1 bis 3, **dadurch gekennzeichnet, dass** der Träger (1) durch teilweises Zusetzen (c) eines Ausgangsträgers (1) erhalten wird, das ausgehend von der dem zu behandelnden Fluid zugewandten Fläche (3) des Trägers über eine gegebene konstante Tiefe (p), die ausgehend von der dem zu behandelnden Fluid zugewandten Fläche (3) des Trägers gemessen ist, vollzogen wird.

5. Membran nach einem der Ansprüche 1 bis 4, **dadurch gekennzeichnet, dass** das teilweise Zusetzen (c) derart vollzogen wird, dass sie über diese konstante Tiefe (p) eine zunehmende mittlere Querporosität aufweist, wenn man sich innerhalb des Trägers, quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt.

6. Membran nach Anspruch 4 oder 5, **dadurch gekennzeichnet, dass** die Zusetztiefe (p) größer als der mittlere Radius der den Ausgangsträger bildenden agglomerierten Partikel und vorzugsweise größer als deren mittlerer Durchmesser ist.

7. Membran nach einem der Ansprüche 4 bis 6, **dadurch gekennzeichnet, dass** die Zusetztiefe (p) größer als oder gleich 2,5 $\mu$m, vorzugsweise größer als oder gleich 5 $\mu$m ist.

8. Membran nach einem der Ansprüche 1 bis 7, **dadurch gekennzeichnet, dass** das teilweise Zusetzen (c) des Trägers dadurch erreicht wird, dass ausgehend von der dem zu behandelnden Fluid zugewandten Fläche (3) des Trägers anorganische Partikel mit einem mittleren Durchmesser, der kleiner als der mittlere Durchmesser dp der Poren des Trägers vor dem Zusetzen ist und vorzugsweise zwischen dp/100 und dp/2 liegt, eindringen.

9. Membran nach Anspruch 8, **dadurch gekennzeichnet, dass** sich an das Eindringen von anorganischen Partikeln ein Sintern anschließt.

10. Membran nach einem der Ansprüche 4 bis 9, **dadurch gekennzeichnet, dass** die mittlere Querporosität gleichmäßig und kontinuierlich über die Tiefe (p) zunimmt, wenn man sich innerhalb des Trägers (1), quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt.

11. Membran nach einem der Ansprüche 1 bis 9, **dadurch gekennzeichnet, dass** die mittlere Querporosität stufenweise ($P_i$) zunimmt, wenn man sich innerhalb des Trägers (1), quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt.

12. Membran nach einem der Ansprüche 1 bis 11, **dadurch gekennzeichnet, dass** er wenigstens einen Innenkanal (2), der an seinen beiden Enden offen und durch die dem zu behandelnden Fluid zugewandte Fläche (3) des Trägers begrenzt ist, umfasst.

**13.** Membran nach einem der Ansprüche 1 bis 12, **dadurch gekennzeichnet, dass** die Trennschicht (5) eine Dicke aufweist, die in Zirkulationsrichtung f des zu behandelnden Fluids abnimmt.

**14.** Verfahren zur Herstellung einer Membran für die Tangentialfiltration eines zu behandelnden Fluids, umfassend einen von einem aus Metalloxiden ausgewählten anorganischen Material gebildeten porösen Träger (1), der wenigstens eine Fläche (3), die dem in einer Zirkulationsrichtung zirkulierenden zu behandelnden Fluid zugewandt ist, und eine Austrittsfläche ($1_1$) für eine als Permeat bezeichnete Fraktion, welche den porösen Träger durchquert, aufweist, **dadurch gekennzeichnet, dass** es einen Schritt umfasst, der darin besteht, einen porösen Ausgangsträger dadurch zu verändern, dass über eine im Wesentlichen kontante Tiefe (p), ausgehend von der dem zu behandelnden Fluid zugewandten Fläche (3) des Trägers, aus einem aus Metalloxiden ausgewählten Material bestehende anorganische Partikel mit einem mittleren Durchmesser, der kleiner als der mittlere Durchmesser dp der Poren des Ausgangsträgers ist, eindringen, um eine zunehmende mittlere Querporosität zu erhalten, wenn man sich innerhalb des Trägers, quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt, wobei die mittlere Längsporosität des Trägers (1) ihrerseits homogen ist, wenn man sich innerhalb des Trägers (1), parallel zu der dem zu behandelnden Fluid zugewandten Fläche (3) des Trägers, in der Zirkulationsrichtung des zu behandelnden Fluids bewegt.

**15.** Verfahren nach Anspruch 14, **dadurch gekennzeichnet, dass** sich an den Schritt, der darin besteht, den porösen Träger durch Eindringen zu verändern, ein Sinterschritt anschließt.

**16.** Verfahren nach Anspruch 14 oder 15, **dadurch gekennzeichnet, dass** der mittlere Durchmesser der anorganischen Partikel zwischen dp/100 und dp/2 liegt.

**17.** Verfahren nach einem der Ansprüche 14 bis 16, **dadurch gekennzeichnet, dass** das Eindringen von anorganischen Partikeln über eine Tiefe (p) vollzogen wird, die größer als der mittlere Radius der den Ausgangsträger bildenden agglomerierten Partikel und vorzugsweise größer als deren mittlerer Durchmesser ist.

**18.** Verfahren nach einem der Ansprüche 14 bis 17, **dadurch gekennzeichnet, dass** das Zusetzen des Trägers über die Eindringtiefe (p) der anorganischen Partikel abnehmend ist, wenn man sich innerhalb des Trägers, quer zu der dem zu behandelnden Fluid zugewandten Fläche (3) des Trägers, von der dem zu behandelnden Fluid zugewandten Fläche (3) des Trägers in Richtung der Austrittsfläche ($1_1$) für das Permeat bewegt.

**19.** Verfahren nach einem der Ansprüche 14 bis 18, **dadurch gekennzeichnet, dass** das Zusetzen derart vollzogen wird, dass die Permeabilität des erhaltenen Trägers um einen Faktor zwischen 1,5 und 10 gegenüber dem Ausgangsträger reduziert ist.

**Claims**

**1.** A membrane (4) for the tangential filtration of a fluid to be processed, associating :

- a porous support (1), for the tangential filtration of a fluid to be processed, made of an inorganic material chosen among metallic oxides, the said support having at least one surface (3) oriented toward the fluid to be processed flowing in a given direction of flow and a surface ($1_1$) for the exit of a fraction called the filtrate flowing through the porous support,
- with at least one separation layer (5) for the fluid to be processed, obtained from a suspension that contains at least one metallic oxide and covering the surface (3) of the support oriented toward the fluid to be processed, with the said separation layer (5) having a porosity that is less than that of the support (1)

**characterised in that**, the support (1) corresponds to a initial support partially clogged with particles made of a material chosen among metallic oxides and has, over a given constant depth (p) measured from the surface (3) of the support oriented toward the fluid to be processed, an increasing average transverse porosity when one moves toward the interior of the support, across the surface (3) of the support oriented toward the fluid to be processed, from the surface (3) of the support oriented toward the fluid to be processed, toward the surface for the exit ($1_1$) of the filtrate, with the average longitudinal porosity of the support (1), for its part, being homogeneous when one moves toward the interior of the support (1), parallel to the surface (3) of the support oriented toward the fluid to be processed, in the direction of flow of the fluid to be processed.

2. A porous membrane (1) according to claim 1, **characterised in that** its permeability is reduced by a factor of between 1.5 and 10 in relation to the initial support.

3. A membrane (1) according to claim 1 or 2, **characterised in that** the average diameter of the pores increases over the depth (e) of the support (1), when one moves toward the interior of the support (1), across the surface (3) of the support oriented toward the fluid to be processed, from the surface (3) of the support oriented toward the fluid to be processed toward the surface ($1_1$) for the exit of the filtrate.

4. A membrane according to one of claims 1 to 3, **characterised in that** the support (1) is obtained by partial clogging (c) of an initial support (1) created from the surface (3) of the support oriented toward the fluid to be processed, over a given constant depth (p) measured from the surface (3) of the support oriented toward the fluid to be processed.

5. A membrane according to one of claims 1 to 4, **characterised in that** partial clogging (c) is effected so as to achieve over this constant depth (p) an increasing average transverse porosity when one moves toward the interior of the support across the surface (3) of the support oriented toward the fluid to be processed from the surface (3) of the support oriented toward the fluid to be processed toward the surface ($1_1$) for the exit of the filtrate.

6. A membrane according to claim 4 or 5, **characterised in that** the clogging depth (p) is greater than the average radius of the agglomerated particles constituting the initial support, and preferably greater than their average diameter.

7. A membrane according to one of claims 4 to 6, **characterised in that** the clogging depth (p) is equal to or greater than 2.5 $\mu$m, and preferably equal to or greater than 5 $\mu$m.

8. A membrane according to one of claims 1 to 7, **characterised in that** the partial clogging (c) of the support is achieved by penetration, from the surface (3) of the support oriented toward the fluid to be processed, of inorganic particles whose average diameter is less than the average diameter dp of the pores of the support before clogging, and preferably of between dp/100 and dp/2.

9. A membrane according to claim 8, **characterised in that** the penetration of inorganic particles is followed by a sintering process.

10. A membrane according to one of claims 4 to 9, **characterised in that** the average transverse porosity increases regularly and continuously over the depth (p) when one moves toward the interior of the support (1) across the surface (3) of the support oriented toward the fluid to be processed, from the surface (3) of the support oriented toward the fluid to be processed toward the surface ($1_1$) for the exit of the filtrate.

11. A membrane according to one of claims 1 to 9, **characterised in that** the average transverse porosity increases in steps (Pi) when one moves toward the interior of the support (1) across the surface (3) of the support oriented toward the fluid to be processed, from the surface (3) of the support oriented toward the fluid to be processed toward the surface ($1_1$) for the exit of the filtrate.

12. A membrane according to one of claims 1 to 11, **characterised in that** it includes at least one internal channel (2) open at both of its ends and delimited by the surface (3) of the support oriented toward the fluid to be processed.

13. A membrane according to one of claims 1 to 12, **characterised in that** the separation layer (5) has a thickness which reduces along the direction of flow (f) of the fluid to be processed.

14. A process for the manufacture of a membrane for the tangential filtration of a fluid to be processed, comprising a porous support (1) made of an inorganic material chosen among metallic oxides, the said support having at least one surface (3) oriented toward the fluid to be processed flowing in a given direction of flow, and a surface ($1_1$) for the exit of a fraction called the filtrate, flowing through the porous support, **characterised in that** it includes a stage that consists of modifying a porous initial support by penetration, over a depth (p) that is more-or-less constant, from the surface (3) of the support oriented toward the fluid to be processed, of inorganic particles made of a material chosen among the metallic oxides whose average diameter is less than the average diameter dp of the pores of the initial support, so as to achieve an increasing average transverse porosity when one moves toward the interior of the support, across the surface (3) of the support oriented toward the fluid to be processed, from the surface (3) of the support oriented toward the fluid to be processed toward the surface ($1_1$) for the exit of the filtrate, with the average longitudinal porosity of the support (1), for its part, being homogeneous when one moves toward the interior of the support (1), parallel to the surface (3) of the support oriented toward the fluid to be processed, in the direction of flow of the fluid to be processed.

15. A process according to claim 14, **characterised in that** the stage that consists of modifying the porous support by penetration is followed by a stage of sintering.

16. A process according to claim 14 or 15, **characterised in that** the average diameter of the inorganic particles is between dp/100 and dp/2.

17. A process according to one of claims 14 to 16, **characterised in that** the penetration of inorganic particles is effected over a depth (p) that is greater than the average radius of the agglomerated particles constituting the initial support, and preferably greater than their average diameter.

18. A process according to one of claims 14 to 17, **characterised in that** the clogging of the support decreases over the depth (p) of penetration of the inorganic particles, when one moves toward the interior of the support, across the surface (3) of the support oriented toward the fluid to be processed, from the surface (3) of the support oriented toward the fluid to be processed toward the surface for $(1_1)$ for the exit of the filtrate.

19. A process according to one of claims 14 to 17, **characterised in that** the clogging is carried in order the permeability of the obtained support is reduced by a factor of between 1.5 and 10 in relation to the initial support.

FIG.1

FIG.4

FIG.2

FIG.3

**EP 1 742 722 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6375014 B
- US 5762841 A
- US 20040050773 A1
- EP 1074291 A